# EUROPÄISCHE PATENTANMELDUNG

(11) **EP 1 610 435 A2**
(43) Veröffentlichungstag der Anmeldung: **28.12.2005**
(21) Anmeldenummer: 05108809.4
(22) Anmeldetag: 07.09.2000
(51) Int. Cl.: H02J 3/01, H02J 3/18

(54) **Verfahren zur Blindleistungsregelung sowie Vorrichtung zur Erzeugung elektrischer Energie in einem elektrischen Netz**

(30) Priorität: 13.09.1999 DE 19943847; 27.04.2000 DE 10020635
(62) Teilanmeldung aus: 00960619.5
(71) Anmelder: Wobben, Aloys, 26607 Aurich (DE)
(72) Erfinder: Wobben, Aloys, 26607 Aurich (DE)
(74) Vertreter: Eisenführ, Speiser & Partner

(57) **Zusammenfassung**

Die Erfindung betrifft ein Verfahren zur Blindleistungsregelung in einem elektrischen Netz, bei welchem elektrische Leistung von einem, vorzugsweise vom Rotor einer Windenergieanlage angetriebenen, elektrischen Generator erzeugt und mit Hilfe einer zwischen Generator und Netz vorgesehenen Kompensationseinrichtung zur Kompensation von Blindleistung entsprechend moduliert wird, sowie eine Vorrichtung zur Erzeugung elektrischer Energie in einem elektrischen Netz, mit einem, vorzugsweise vom Rotor einer Windenergieanlage angetriebenen, elektrischen Generator und einer zwischen Generator und Netz vorgesehenen Kompensationseinrichtung zur Kompensation von Blindleistung. Das Besondere der Erfindung besteht darin, dass die Kompensationseinrichtung so geregelt wird, dass die an den Verbraucher abgegebene elektrische Leistung einen Blindleistungsanteil aufweist, der hinsichtlich seiner Phase, Amplitude und/oder Frequenz an den Verbraucher angepasst ist, um die Blindleistung in dem Verbraucher zu kompensieren.

## Beschreibung

Die Erfindung betrifft ein Verfahren zur Blindleistungsregelung in einem elektrischen Netz, bei welchem elektrische Leistung von einem, vorzugsweise vom Rotor einer Windenergieanlage angetriebenen, elektrischen Generator erzeugt und mit Hilfe einer zwischen Generator und Netz vorgesehenen Kompensationseinrichtung zur Kompensation von Blindleistung entsprechend moduliert wird. Die Erfindung betrifft ferner eine Vorrichtung zur Erzeugung elektrischer Energie in einem elektrischen Netz, mit einem, vorzugsweise vom Rotor einer Windenergieanlage angetriebenen, elektrischen Generator und einer zwischen Generator und Netz vorgesehenen Kompensationseinrichtung zur Kompensation von Blindleistung.

Viele am elektrischen Netz angeschlossene Verbraucher benötigen induktive Blindleistung. Zur Kompensation eines solchen induktiven Blindleistungsanteils können Kondensatoren verwendet werden, die auch als Phasenschieberkondensatoren bezeichnet werden, deren kapazitiver Blindwiderstand etwa so groß ist wie der induktive Blindwiderstand. Eine vollständige Kompensation der induktiven Blindleistung mit Hilfe von Phasenschieberkondensatoren ist in der Praxis gerade bei hohen Leistungsschwankungen aber nicht möglich. Ferner ist nachteilig, dass die benötigten Phasenschieberkondensatoren, die häufig zu sogenannten Kondensatorbatterien zusammengefasst sind, die im übrigen viel Platz benötigen, sich negativ auf die Stabilität des elektrischen Netzes auswirken.

Aus der US 5,225,712 ist ein Leistungskonverter für eine Windenergieanlage bekannt. Dabei sind Mittel vorgesehen, um einen gewünschten Blindleistungsfaktor der abgegebenen Leistung einzustellen.

Die Aufgabe der vorliegenden Erfindung besteht darin, die zuvor erwähnten Nachteile des Standes der Technik zu vermeiden und die Blindleistung in einem elektrischen Netz auf einfache Weise zu kompensieren.

Diese Aufgabe wird bei einem Verfahren und einer Vorrichtung der eingangs genannten Art dadurch gelöst, dass die Kompensationseinrichtung so geregelt wird, dass die an den Verbraucher abgegebene elektrische Leistung einen Blindleistungsanteil aufweist, der hinsichtlich seiner Phase, Amplitude und/oder Frequenz an den Verbraucher derart angepasst ist, um die Blindleistung in dem Verbraucher zu kompensieren.

Erfindungsgemäß wird mit Hilfe der Kompensationseinrichtung eine Blindleistung 'erzeugt', die in der Lage ist, die Blindleistung in dem Verbraucher zu kompensieren. Beispielsweise kann mit Hilfe der erfindungsgemäßen Kompensationseinrichtung ein kapazitiver Blindleistungsanteil erzeugt werden, der an den vom Verbraucher benötigten induktiven Blindleistungsanteil so angepasst ist, dass er den induktiven Blindleistungsanteil im Verbraucher im wesentlichen vollständig kompensiert. Der Vorteil der Erfindung besteht somit im wesentlichen darin, dass eine Regelung zur Verfügung gestellt wird, die insbesondere auf häufig auftretende hohe Leistungsschwankungen schnell reagiert, so dass die vollständige Blindleistungskompensation im wesentlichen erhalten bleibt. Demnach kann wahlweise induktive oder kapazitive Blindleistung in das elektrische Netz eingespeist werden, was erfindungsgemäß durch die Regelung der Kompensationseinrichtung realisiert wird.

Mit Hilfe der erfindungsgemäßen Regelung ist es dabei vorzugsweise auch möglich, dass die abgegebene elektrische Leistung eine Frequenz aufweist, die der Frequenz des Verbrauchers entspricht oder auch ein Vielfaches der Verbraucherfrequenz darstellt. Im ersteren Fall kann demnach Blindleistung mit der Frequenz des Verbrauchers oder der Netzfrequenz des elektrischen Netzes geliefert werden. Im letzteren Fall kann beispielsweise nach Wunsch Oberschwingungsblindleistung in das elektrische Netz eingespeist werden. Beispielsweise kann die fünfte Oberschwingung mit einer Frequenz von 250 Hz als kapazitive Oberschwingung in das Netz eingespeist werden. Diese kompensiert dann die Oberschwingungsblindleistung von elektrischen Verbrauchern, die an das elektrische Netz angeschlossen sind, wie beispielsweise Fernseher, Energiesparlampen usw..

Zweckmäßigerweise weist die Kompensationseinrichtung einen Wechselrichter auf, mit dem sich Phase, Amplitude und/oder Frequenz der Spannungs- und/oder Stromverläufe besonders einfach einstellen bzw. regeln lassen, um einen Blindleistungsanteil zu erzeugen, der geeignet ist, die Blindleistung in dem Verbraucher entsprechend zu kompensieren.

Vorzugsweise weist die Kompensationseinrichtung eine Messeinrichtung zur Erfassung der Spannungs- und/oder Stromverläufe im elektrischen Netz, vorzugsweise am Einspeisepunkt, auf. Bei einer Weiterbildung der Ausführung bei welcher die Kompensationseinrichtung einen Wechselrichter enthält, steuert die Kompensationseinrichtung in Abhängigkeit von den Messergebnissen der Messeinrichtung den Wechselrichter.

Die vom elektrischen Generator erzeugte Spannung wird vorzugsweise unter entsprechender Anpassung des Blindleistungsanteiles in der an den Verbraucher abgegebenen elektrischen Leistung im wesentlichen auf einem vorgegebenen Sollwert geregelt. Dabei kann die Anpassung des Blindleistungsanteiles durch entsprechende Steuerung des Leistungsfaktors (cosϕ) oder der Phase des vom elektrischen Generator abgegebenen Stromes stattfinden. Wenn der elektrische Generator über eine Leitung und/oder einen Transformator an ein elektrisches Netz angeschlossen ist, wird zweckmäßigerweise die vom elektrischen Generator erzeugte Spannung so geregelt, dass deren Betrag in der Größenordnung des Betrages der Netzspannung liegt oder diesem entspricht. Dadurch werden unerwünscht hohe oder niedrige Spannungen generatorseitig vermieden. Üblicherweise ist die Netzspannung im wesentlichen konstant, wenn es sich um ein im wesentlichen starres Netz handelt.

Nachfolgend werden bevorzugte Ausführungsbeispiele der Erfindung anhand der beiliegenden Zeichnungen näher erläutert. Es zeigen:
- Fig. 1 bis 4: verschiedene Spannungs- und Stromverläufe;
- Fig. 5: den Oberschwingungsanteil aus dem Stromverlauf von Figur 4;
- Fig. 6: schematisch einen Netzausläufer, an dem eine Windenergieanlage und Verbraucher angeschlossen sind;
- Fig. 7: ein Ersatzschaltbild einer elektrischen Leitung;
- Fig. 8: ein Ersatzschaltbild eines elektrischen Netzes mit einem Transforma- tor und einer elektrischen Freileitung (a), an die ein elektrischer Ge- nerator einer Windenergieanlage angeschlossen ist, sowie verschie- dene Betriebszustände darstellende Zeigerdiagramme (b bis e);
- Fig. 9: ein schematisches Schaltbild einer Anordnung zur Kompensation von Oberschwingungsströmen in einer Stichleitung; und
- Fig. 10: ein schematisches Schaltbild einer Anordnung zur Kompensation von Oberschwingungsströmen in einem elektrischen Netz.

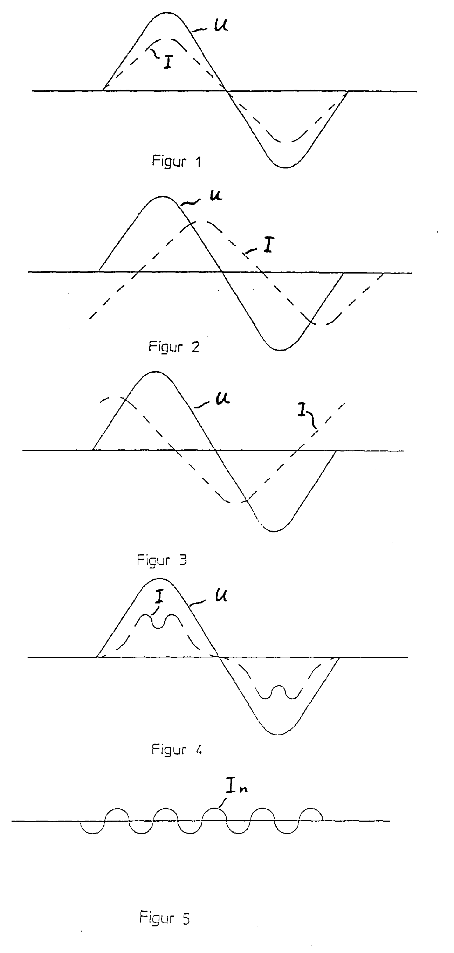

Das Auftreten von Grundschwingungsblindleistungen in einem elektrischen Netz ist schon sehr lange bekannt. Die Figuren 1 bis 3 zeigen verschiedene Spannungs- und Stromverläufe.

In Figur 1 ist ein Fall dargestellt, in dem keine Blindleistung auftritt, d.h. Spannung U und Strom I sind nicht phasenverschoben. Der Strom eilt weder der Spannung vor noch nach. Es ist also keine Grundschwingungsblindleistung vorhanden.

Figur 2 zeigt den Fall, in dem der Strom I zeitlich der Spannung U nacheilt. Hierbei wird induktive Blindleistung benötigt, was bei den meisten elektrischen Verbrauchern der Fall ist, da sie - wie beispielsweise Elektromotoren - Induktivitäten aufweisen.

Figur 3 zeigt den Fall, in dem der Strom I zeitlich der Spannung U vorauseilt. Hierbei wird kapazitive Blindleistung benötigt.

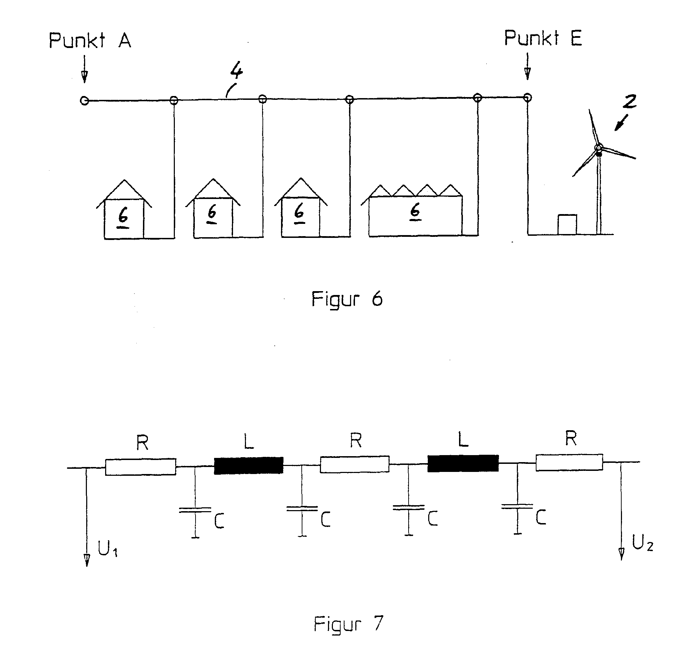

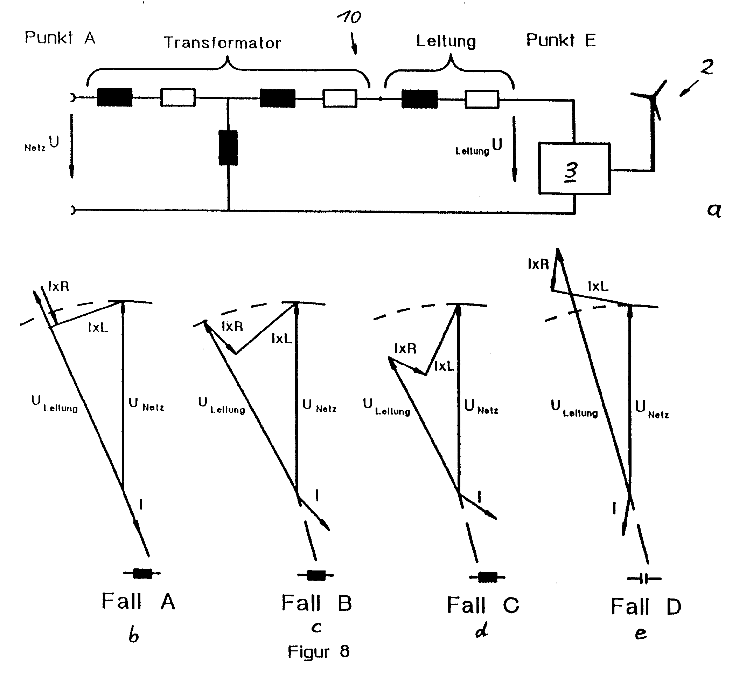

In Figur 6 ist eine Anordnung dargestellt, bei welcher eine Windenergieanlage 2 an einem Netzausläufer angeschlossen ist. Vom Anfang (Punkt A) bis zum Ende (Punkt E) des Netzausläufers bzw. der elektrischen Leitung 4 sind Verbraucher 6 angeschlossen. Wenn die Windenergieanlage 2 nicht in das Netz einspeist, fällt die Spannung vom Anfang (Punkt A) bis zum Ende (Punkt E) der Leitung 4 immer mehr ab; die Spannung an dem Punkt E und diesem nächstliegenden letzten Verbraucher 6 ist somit kleiner als an dem Punkt A und dem diesem Punkt A nächstliegenden ersten Verbraucher 6 an dieser elektrischen Leitung 4. Wenn nun die Windenergieanlage 2 oder ein größerer Windpark am Ende der elektrischen Leitung 4 bei Punkt E in Figur 6 angeschlossen wird und Strom in die elektrische Leitung 4 einspeist, steigt die Anschlussspannung am Punkt E der elektrischen Leitung 4 extrem an. Nun stellt sich die Situation umgekehrt als im Fall ohne am Ende der elektrischen Leitung 4 angeschlossener Windenergieanlage 2 dar.

Für den Fall, dass die elektrische Leitung als freie Leitung (kein Erdkabel) vorgesehen ist, stellt eine solche Leitung im wesentlichen tatsächlich eine Induktivität dar.

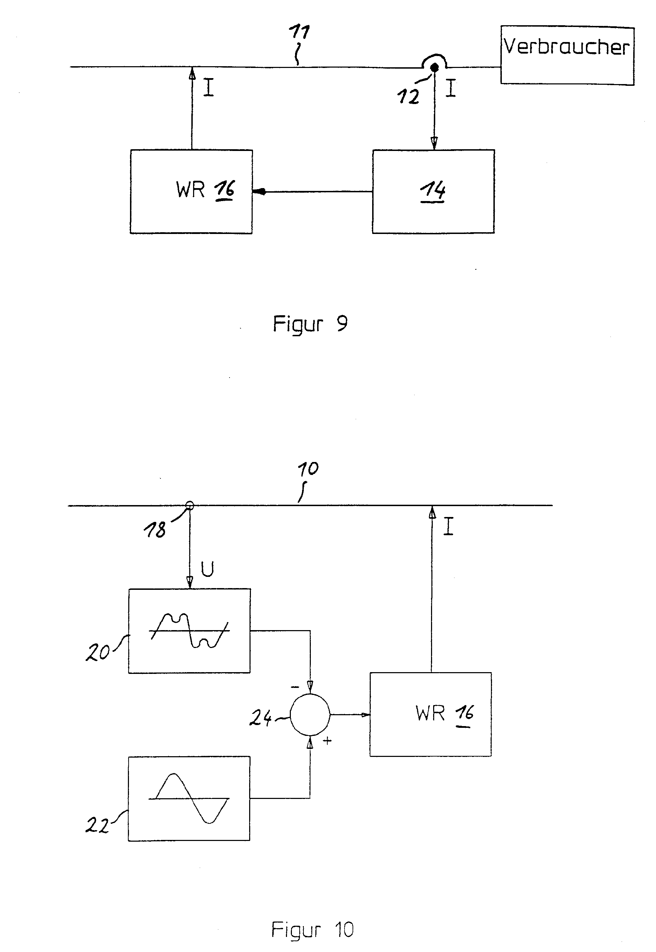

Demgegenüber stellen Erdkabel in der Regel eine gedämpfte Kapazität dar. Hierzu wird auf das in Figur 7 dargestellte Ersatzschaltbild einer Leitung verwiesen.

Mit Hilfe einer Blindleistungsregelung an der Windenergieanlage kann die Spannung am Einspeisepunkt (Punkt E gemäß Figur 6) geregelt werden. Hierzu wird vorzugsweise ein Wechselrichter verwendet.

In Figur 8a ist ein Ersatzschaltbild gezeigt, wonach der elektrische Generator 3 der Windenergieanlage 2 über eine Leitung und einen Transformator an ein (nicht näher dargestelltes) elektrisches Netz angeschlossen ist, bei welchem es sich üblicherweise um ein starres Netz handelt. In den Figuren 8b bis e sind Zeigerdiagramme zu verschiedenen Betriebszuständen dargestellt. Im Fall A gemäß Figur 8b speist der Generator 3 der Windenergieanlage 2 nur Wirkleistung in das elektrische Netz 10; man erkennt sofort, dass die Spannung U_{Leitung} am Einspeisespunkt/Punkt E höher ist als die Spannung U_{Netz} am Punkt A. Im Fall B gemäß Figur 8c wird ein Anteil an induktiver Blindleistung zusätzlich zur Wirkleistung eingespeist, und man erkennt, dass die Spannungen U_{Leitung} und U_{Netz} am Ende gemäß Punkt E und am Anfang gemäß Punkt A gleich groß sind. Der Fall C gemäß Figur 8d zeigt demgegenüber, dass zuviel induktive Blindleistung eingespeist wird; dies hat zur Folge, dass die Spannung U_{Leitung} am Punkt E zu niedrig wird. Der Fall D gemäß Figur 8e zeigt die Situation, wenn überhöhte kapazitive Blindleistung eingespeist wird; folglich steigt die Spannung U_{Leitung} am Einspeisepunkt/Punkt E gegenüber der Spannung U_{Netz} sehr stark an. Letzteres muss unbedingt vermieden werden.

Zur Blindleistungskompensation wird ein (nicht dargestellter) Wechselrichter zwischen dem Generator 3 und dem Punkt E gemäß Figur 8a geschaltet. Die Funktion eines solchen Wechselrichters besteht nun darin, exakt einem vorgegebenem Spannungswert zu folgen, indem der cos ϕ des Ausgangsstromes entsprechend schnell und dynamisch geregelt wird.

Außerdem treten im elektrischen Netz Oberschwingungsblindleistungen auf. Immer mehr elektrische Verbraucher nämlich benötigen einen Strom, der Oberschwingungen enthält, oder erzeugen im elektrischen Netz Oberschwingungen, wie z.B. Fernsehgeräte, die am Eingang einen Gleichrichter besitzen, oder Industriebetriebe, die geregelte Stromrichter-Antriebe betreiben. Figur 4 zeigt einen Fall, bei dem Oberschwingungsblindleistung benötigt wird. Der Spannungsverlauf U ist nahezu sinusförmig, während der Strom I neben der Grundschwingung auch noch Oberschwingungen enthält. Deutlich zu erkennen ist hier die fünfte Oberschwingung. Figur 5 zeigt die benötigte fünfte Oberschwingung als separaten Anteil In des Stromes I.

Solche Oberschwingungen im Stromverlauf (Stromoberschwingungen) verursachen im elektrischen Netz Spannungsoberschwingungen, die die Qualität der Spannung im elektrischen Netz beeinträchtigen. Es ist daher erforderlich, auch solche Oberschwingungsblindleistungen zu kompensieren.

In Figur 9 ist schematisch eine Stichleitung 11 dargestellt, die mit ihrem einen (gemäß Figur 9 linken) Ende an ein (nicht dargestelltes) elektrisches Netz angeschlossen ist und an deren anderem (gemäß Figur 9 rechtem) Ende Verbraucher 6 angeschlossen sind. Eine solche Stichleitung 11 kann beispielsweise ein Industriegelände oder ein oder mehrere Dörfer mit elektrischem Strom versorgen. Der zu den Verbrauchern 6 fließende Strom wird mit Hilfe eines Stromwandlers 12 gemessen. Das Messsignal des Stromwandlers 12 wird an eine Auswertungsschaltung 14 übermittelt, die kontinuierlich on-line analysiert, welche Stromoberschwingungen im Strom auf der Stichleitung 11 enthalten sind. Dieses Messergebnis dient als Sollwert, der als Ausgangssignal einem Wechselrichter 16 zugeführt wird, der dann im wesentlichen zeitgleich die benötigten Oberschwingungen erzeugt und vor dem Stromwandler 12 in die elektrische Stichleitung 11 einspeist. Damit wird sichergestellt, dass die benötigte Oberschwingungsblindleistung zur Kompensation der im elektrischen Netz vorhandenen Oberschwingungsblindleistung vom Wechselrichter 16 erzeugt wird und nicht aus dem elektrischen Netz entnommen wird.

In Figur 10 ist schematisch das elektrische Netz 10 gezeigt, deren Spannung mit Hilfe eines Spannungswandlers 18 gemessen wird. Das Messsignal des Spannungswandlers 18 wird einer Auswerteeinrichtung 20 zugeführt. Ferner ist eine Sollwerteinrichtung 22 vorgesehen, die den gewünschten Spannungsverlauf vorgibt. Das Ausgangssignal der Auswerteeinrichtung 20 wird von einer Subtrahiereinrichtung 24 vom Ausgangssignal der Sollwerteinrichtung 22 abgezogen und das daraus resultierende Differenz-Ausgangssignal der Subtrahiereinrichtung 24 wird dem Wechselrichter 10 zugeführt, der dann im wesentlichen zeitgleich die benötigten Oberschwingungen erzeugt, um die Oberschwingungsblindleistung im elektrischen Netz zu kompensieren. Bei dieser Anordnung wird also die Netzspannung mit Hilfe des Spannungswandlers 18 gemessen, und es wird in der Auswerteeinrichtung 20 festgestellt, welche Oberschwingungen im Spannungsverlauf enthalten sind. Die Oberschwingungsströme im elektrischen Netz 10 erzeugen nämlich an der Netzimpedanz Spannungsabfälle entsprechend ihrer Frequenz und Amplitude. Die so gemessenen und berechneten Werte werden dem Wechselrichter 16 als Strom-Sollwerte vorgegeben. Der Wechselrichter 16 erzeugt dann entsprechend der Sollwerte die Stromoberschwingungen mit den benötigten Frequenzen, Amplituden und Phasenlagen.

## Patentansprüche

1. Verfahren zur Blindleistungsregelung in einem elektrischen Netz (10), bei welchem elektrische Leistung von einem, vorzugsweise vom Rotor einer Windenergieanlage (2) angetriebenen, elektrischen Generator (3) erzeugt und mit Hilfe einer zwischen Generator (3) und Netz (10) vorgesehenen Kompensationseinrichtung (16) zur Kompensation von Blindleistung entsprechend moduliert wird,
**dadurch gekennzeichnet, dass** die Kompensationseinrichtung (16) so geregelt wird, dass die an den Verbraucher (6) abgegebene elektrische Leistung einen Blindleistungsanteil aufweist, der hinsichtlich seiner Phase, Amplitude und/oder Frequenz an den Verbraucher (6) derart angepasst ist, um die Blindleistung in dem Verbraucher (6) zu kompensieren.

2. Verfahren nach Anspruch 1,
**dadurch gekennzeichnet, dass** die Kompensationseinrichtung (16) so geregelt wird, dass der elektrische Generator (3) kapazitive Blindleistung erzeugt, um die induktive Blindleistung im Verbraucher (6) zu kompensieren.

3. Verfahren nach Anspruch 1 oder 2,
**dadurch gekennzeichnet, dass** die abgegebene elektrische Leistung eine Frequenz aufweist, die der Frequenz des Verbrauchers (6) entspricht oder ein Vielfaches der Verbraucherfrequenz darstellt.

4. Verfahren nach mindestens einem der Ansprüche 1 bis 3,
**dadurch gekennzeichnet, dass** die Kompensationseinrichtung als Wechselrichter (16) arbeitet.

5. Verfahren nach mindestens einem der Ansprüche 1 bis 4,
**dadurch gekennzeichnet, dass** die Kompensationseinrichtung (16) die Spannungs- und/oder Stromverläufe im elektrischen Netz (10), vorzugsweise am Einspeisepunkt
(E), misst und in Abhängigkeit von den Messergebnissen den Blindleistungsanteil in der vom elektrischen Generator (3) erzeugten elektrischen Leistung regelt.

6. Verfahren nach mindestens einem der Ansprüche 1 bis 5,
**dadurch gekennzeichnet, dass** die vom elektrischen Generator (3) erzeugte Spannung unter entsprechender Anpassung des Blindleistungsanteiles in der an den Verbraucher (6) abgegebenen elektrischen Leistung im wesentlichen auf einem vorgegebenen Sollwert geregelt wird.

7. Verfahren nach Anspruch 6,
**dadurch gekennzeichnet, dass** die Anpassung des Blindleistungsanteiles durch entsprechende Steuerung des Leistungsfaktors (cosϕ) oder der Phase des von dem elektrischen Generator (3) abgegebenen Stromes stattfindet.

8. Verfahren nach Anspruch 6 oder 7, bei welchem der elektrische Generator (3) über eine Leitung und/oder einen Transformator an ein elektrisches Netz angeschlossen ist,
**dadurch gekennzeichnet, dass** die vom elektrischen Generator (3) erzeugte Spannung so geregelt wird, dass deren Betrag in der Größenordnung des Betrages der Netzspannung liegt oder diesem entspricht.

9. Vorrichtung zur Erzeugung elektrischer Energie in einem elektrischen Netz (10), mit einem, vorzugsweise vom Rotor einer Windenergieanlage (2) angetriebenen, elektrischen Generator (3), einer zwischen Generator (3) und Netz (10) vorgesehenen Kompensationseinrichtung (16) zur Kompensation von Blindleistung,
**gekennzeichnet durch** eine Regelungseinrichtung (14; 20, 22, 24), die die Kompensationseinrichtung (16) so regelt, dass die an den Verbraucher (6) abgegebene elektrische Leistung einen Blindleistungsanteil aufweist, der hinsichtlich seiner Phase, Amplitude und/oder Frequenz an den Verbraucher (6) angepasst ist, um Blindleistung in dem Verbraucher (6) zu kompensieren.

10. Vorrichtung nach Anspruch 9,
**dadurch gekennzeichnet, dass** die Regelungseinrichtung (14; 20, 22, 24) die Kompensationseinrichtung (16) so regelt, dass der elektrische Generator (3) kapazitive Blindleistung derart erzeugt, um die induktive Blindleistung im Verbraucher (6) zu kompensieren.

11. Vorrichtung nach Anspruch 9 oder 10,
**dadurch gekennzeichnet, dass** die abgegebene elektrische Leistung eine Frequenz aufweist, die der Frequenz des Verbrauchers (6) entspricht und ein Vielfaches der Verbraucherfrequenz darstellt.

12. Vorrichtung nach mindestens einem der Ansprüche 9 bis 11,
**dadurch gekennzeichnet, dass** die Kompensationseinrichtung (16) einen Wechselrichter (16) aufweist.

13. Vorrichtung nach mindestens einem der Ansprüche 9 bis 12,
**dadurch gekennzeichnet, dass** die Regelungseinrichtung (14; 20, 22, 24) eine Messeinrichtung (12; 18) zur Erfassung der Spannungs- und/oder Stromverläufe im elektrischen Netz (10), vorzugsweise am Einspeisepunkt, aufweist.

14. Vorrichtung nach den Ansprüchen 12 und 13,
**dadurch gekennzeichnet, dass** die Regelungseinrichtung (14; 20, 22, 24) in Abhängigkeit von den Messergebnissen der Messeinrichtung (12; 18) den Wechselrichter (16) steuert.

15. Vorrichtung nach mindestens einem der Ansprüche 9 bis 14,
**dadurch gekennzeichnet, dass** die Regelungseinrichtung (14; 20, 22, 24) die vom elektrischen Generator (3) erzeugte Spannung durch Steuerung des Blindleistungsanteiles in der an den Verbraucher (6) abgegebenen elektrischen Leistung im wesentlichen auf einen vorgegebenen Sollwert regelt.

16. Vorrichtung nach Anspruch 15,
**dadurch gekennzeichnet, dass** die Regelungseinrichtung (14; 20, 22, 24) die Anpassung des Blindleistungsanteiles durch entsprechende Steuerung des Leistungsfaktors (cosΦ) oder der Phase des vom elektrischen Generator (3) abgegebenen Stromes vornimmt.

17. Vorrichtung nach Anspruch 15 oder 16, bei welcher der elektrische Generator (3) über eine Leitung und/oder einen Transformator an ein elektrisches Netz angeschlossen ist,
**dadurch gekennzeichnet, dass** die Regelungseinrichtung die vom elektrischen Generator (3) erzeugte Spannung so regelt, dass deren Betrag in der Größenordnung des Betrages der letzten Spannung liegt oder diesem entspricht.
